# EUROPEAN PATENT SPECIFICATION

(11) **EP 0 485 639 B1**
(45) Date of publication and mention of the grant of the patent: **29.03.1995**
(21) Application number: 90121535.0
(22) Date of filing: 10.11.1990
(51) Int. Cl.: B29C 44/12, B29B 13/10

(54) **EVA insole manufacturing process**
Verfahren zur Herstellung von EVA-Schuheinlegsohlen
Procédé de fabrication de semelles intérieur EVA

(43) Date of publication of application: 20.05.1992
(73) Proprietor: Yang, Kuo-Nan, Taichung (TW)
(72) Inventor: Yang, Kuo-Nan, Taichung (TW)
(74) Representative: Dickel, Klaus, Dipl.-Ing.

(56) References cited:
- EP-A- 0 368 669
- US-A- 3 562 042
- US-A- 3 855 028
- US-A- 4 144 297
- US-A- 4 547 412

## Description

The present invention relates to an EVA insole manufacturing process.

In a conventional EVA insole manufacturing process, an EVA resin is mixed with a foaming agent, and the mixture is then squeezed into strips. The EVA material strips are then placed in a hot press and subjected to a foaming process. After foaming, the foamed EVA strips are placed in a water cooling trough for cooling. After cooling, the foamed EVA strips are cut and trimmed, or sometimes, some pieces of trimmed EVA pieces are adhered together. After passing through a grinding process, the EVA strips thus obtained are placed in a hydraulic machine for form setting. Thus, a whole EVA insole manufacturing process is completed. This EVA insole manufacturing process is not satisfactory, because of the following disadvantages:
1. It requires much human power. In a complete production line, there are generally more than 30 experienced workers required.
2. Much waste material is produced. Because EVA strips are cut and sheared after the foaming process, approximately 40 % or more of the foamed EVA strips are cut off and become useless. Disposal of the waste material is still a problem to settle, and it may cause environmental pollution.
3. It consumes much time (about 3 or more days) to produce a specific style of an EVA insole. Therefore, it is not suitable for producing various styles or designs of EVA insoles at a time.
4. If an insole is comprised of several EVA strips of different hardness bound together, an insole may tear easily due to weak structural strength.

Further, a method of injection molding a foamed thermoplastic resin ball core, particularly used for baseballs, softballs etc., is known from US-A-4144297. This known method proposes to form a flowable homogeneous mass of thermoplastic resin and a blowing agent in an injection molding machine and to inject the mass into a mold to foam the mass. By holding the mass in the mold for a sufficient time to form a non-porous skin, and by a specific cooling procedure a game ball shall be produced which has the substantially same dimension as the mold cavity.

From US-A-3562042, a method of joining moldings of expanded olefin polymers is known in which it is not necessary to use an adhesive. This is achieved by pressing one molding against the other, the moldings still containing expanding agent and whose surfaces having temperatures which are from 5° to 30°C below the melting point of the olefin polymer.

Starting from this prior art, the underlying problem of the invention is to provide an EVA insole manufacturing process which is suitable for producing insoles consisting of at least two different parts, and which consumes less human power, increases the production capacity and reduces manufacturing loss.

According to the invention, this problem is solved by the features of claim 1. Advantageous embodiments of the invention are described in the dependent claims.

By using the method according to the invention, an insole is completely made after the foaming and shape molding processes without any further cutting, shearing, binding or grinding process. Different parts of an insole can be made in different hardness and different color, as desired.

The present invention will now be described by way of an example, with reference to the annexed drawings, in which:
- Fig. 1: illustrates two different moldings according to the present invention; and
- Fig. 2: illustrates an integral insole made of two different moldings according to the present invention.

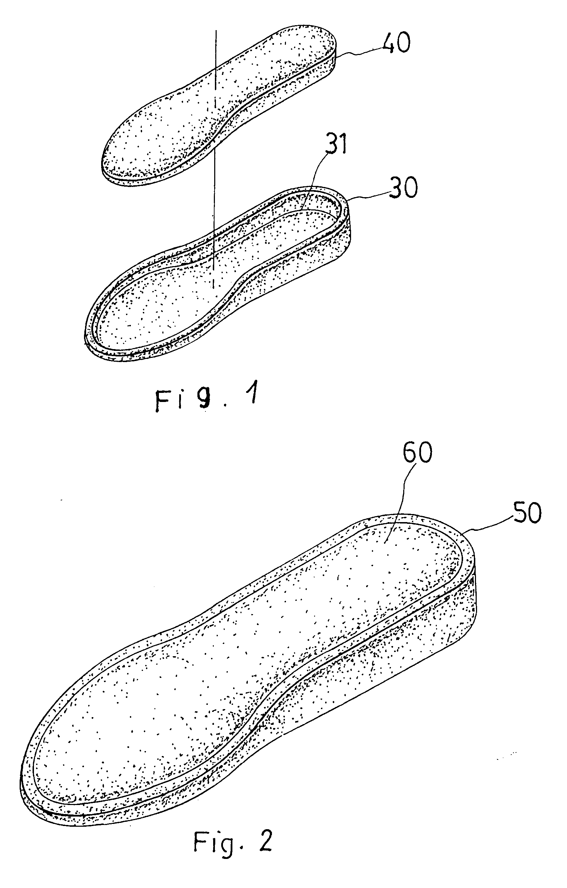

In order to produce two separate moldings 30, 40 shown in Fig. 1, an EVA resin is proportionally mixed with foaming agent and then squeezed into a flat block for each molding 30, 40. The flat blocks thus obtained are broken into pieces by a crusher or the like. The small pieces of EVA material are used as a supply of material for making the moldings 30, 40 through injection molding processes.

According to the present invention, an insole may be so made that its different parts have different hardnesses. The two separate moldings 30, 40 shown in Fig. 1 are respectively made of different EVA materials wherein the EVA material for making the first molding 30 contains a foaming agent in a concentration different from the EVA material for making the second molding 40. Further, the EVA material used for making the first molding 30 may contain a pigment color which is different from the EVA material used for making the second molding 40. After injection, the first molding 30 defines therein a trough 31 for receiving the second molding 40, so that the second molding 40 can be placed inside the first molding 30 and then both the first and second moldings are put into a mold of a hot press for foaming into an integral molding. After form setting of the integral molding, an insole is made. As shown in Fig. 2, the insole thus obtained has an unitary inner part 60 and outer part 50 in different hardness and/or color.

As described above, an EVA insole in accordance with the present invention is made of EVA moldings through foaming and shape molding processes, which EVA moldings are made of EVA material chips containing different concentrations of EVA resin and foaming agent and which are formed through an injection molding process. After the foaming and shape molding processes, an insole is completely made without any further cutting, shearing, binding or grinding process. Different parts of an insole can be made in different hardness and different color, as desired.

## Claims

1. An EVA insole manufacturing process comprising:
a) forming a first molding (30) and a second molding (40) respectively by the steps of
aa) mixing an ethylene vinyl acetate resin with a foaming agent according to a predetermined proportion, and squeezing the resulting mixture into a flat block;
ab) crushing the flat block into pieces and respectively injection molding the pieces into the first molding (30) and the second molding (40) so that the first molding (30) has an trough (31) for receiving the second molding (40);
b) placing the second molding (40) within the trough (31) of the first molding (30) and heat foaming both the first and second moldings together in a mold to form an integral molding; and
c) form setting the integral molding into an insole.

2. The process of claim 1, wherein the first and second moldings (30, 40) contain different concentrations of foaming agent.

3. The process of claim 1 or 2, wherein the first and second moldings (30, 40) contain different pigment colors.

## Patentansprüche

1. Verfahren zur Herstellung einer EVA-Einlegesohle mit folgenden Schritten:
a) Bilden eines ersten Formteils (30) und eines zweiten Formteils (40) mittels der Schritte
aa) Mischen eines Ethylenvinylacetatharzes mit einem Schäummittel gemäß einem vorbestimmten Verhältnis und Drücken der sich ergebenden Mischung in einen flachen Block;
ab) Zerbrechen des flachen Blocks in Stücke und Spritzgießen der Stücke zum ersten Formteil (30) und zweiten Formteil (40), so daß das erste Formteil (30) eine Mulde (31) zur Aufnahme des zweiten Teils (40) hat;
b) Anordnen des zweiten Formteils (40) innerhalb der Mulde (31) des ersten Formteils (30) und Zusammenschäumen sowohl des ersten als auch zweiten Formteils unter Wärme in einer Form, um ein einstückiges Formteil zu bilden; und
c) Formen des einstückigen Formteils zu einer Einlegesohle.

2. Verfahren nach Anspruch 1, wobei das erste und zweite Formteil (30, 40) unterschiedliche Konzentrationen an Schäummittel aufweisen.

3. Verfahren nach Anspruch 1 oder 2, wobei das erste und zweite Formteil (30, 40) unterschiedliche Pigmentfarben aufweisen.

## Revendications

1. Procédé de fabrication d'une semelle intérieure en EVA (éthylène-vinyl-acétate) comprenant les étapes suivantes :
(a) on forme un premier élément moulé (30) et un second élément moulé (40) respectivement par les étapes consistant à :
aa) mélanger une résine éthylène vinyle acétate avec un agent moussant selon une proportion prédéterminée, et on comprime le mélange résultant en un bloc plat ;
ab) écraser le bloc en pièces et mouler respectivement par injection les pièces en formant le premier élément moulé (30) et le second élément moulé (40) de sorte que le premier élément moulé (30) comporte une trémie (31) pour recevoir le second élément moulé (40) ;
b) on place le second élément moulé (40) à l'intérieur de la trémie (31) du premier élément moulé (30) et on fait mousser à la chaleur à la fois le premier et le second élément moulé ensemble dans un moule pour former un élément moulé intégré ; et
c) on fait prendre dans le moule le élément moulé intégré sous la forme d'une semelle intérieure.

2. Procédé selon la revendication 1, dans lequel le premier élément moulé (30) et le second élément moulé (40) contiennent des concentrations différentes d'agent moussant.

3. Procédé selon l'une ou l'autre des revendications 1 et 2, dans lequel le premier et le second élément moulé (30, 40) contiennent des pigments colorés différents.
